# EUROPÄISCHE PATENTANMELDUNG

(11) **EP 3 968 623 A1**
(43) Veröffentlichungstag der Anmeldung: **16.03.2022**
(21) Anmeldenummer: 21190911.4
(22) Anmeldetag: 11.08.2021
(51) Int. Cl.: H04N 5/225, G03B 15/05

(54) **FOTOSYSTEM**

(30) Priorität: 10.09.2020 DE 102020123625
(71) Anmelder: di support GmbH, 65760 Eschborn (DE)
(72) Erfinder: Naruhn, Ralph, 63303 Dreieich (DE); Schaub, Gordon, 61440 Oberursel (DE)
(74) Vertreter: Patentanwälte Olbricht Buchhold Keulertz

(57) **Zusammenfassung**

Beschrieben wird ein Fotosystem mit einem Kameraelement, das wenigstens ein Objektiv und wenigstens einen fotosensitiven Sensor aufweist, einer Bedienerschnittstelle, einer Anzeige und einem Lichtelement, wobei das Kameraelement und die Anzeige in einem Kameragehäuse angeordnet sind, wobei das Kameragehäuse eine Vorderseite, eine Rückseite, einen Gehäuseboden, Seitenteile sowie eine Oberseite aufweist, wobei das Kameraelement an der Vorderseite angeordnet ist, wobei das Lichtelement in einem Lichtelementgehäuse angeordnet ist, wobei das Lichtelementgehäuse an dem Kameragehäuse schwenkbar angeordnet ist, sodass das Lichtelement zwischen einer ersten Stellung, in der das Lichtelementgehäuse an dem Kameragehäuse anliegt, und wenigstens einer zweiten Stellung, in der das Lichtelementgehäuse vom Kameragehäuse absteht, hin- und herschwenkbar ist.

## Beschreibung

Die Erfindung betrifft ein Fotosystem gemäß dem Oberbegriff von Anspruch 1.

Fotosysteme der eingangs genannten Art sind im Allgemeinen bekannt. Entsprechende Fotosysteme dienen zum digitalen Aufzeichnen von Bildern oder Videos.

Zu den entsprechenden Fotosystemen zählen unter anderem Digitalkameras, beispielsweise Kompaktkameras, Spiegelreflexkameras oder spiegellose Kamerasysteme. Die Digitalkameras weisen in aller Regel ein Objektiv und einen fotosensitiven Sensor sowie eine Anzeige auf. Einige Digitalkameras weisen auch Lichtelemente in Form von ins Gehäuse integrierten Blitzgeräten auf, die teilweise von diesem ausgeklappt oder ausgeschoben werden können. Die Blitzgeräte weisen in der Regel eine Blitzröhre auf, die zur Bildaufnahme gezündet wird.

Entsprechende Kameras sind jedoch teilweise schwer zu bedienen und unhandlich. Zudem erlauben sie bei der Verwendung der Blitzgeräte vor der tatsächlichen Aufnahme kein Bild an, das mit dem mit Blitz aufgenommenen Bild vergleichbar ist. Stattdessen wird ein Bild unter den vor der Aufnahme vorherrschenden Lichtbedingungen angezeigt. Insoweit ist eine Beurteilung der Qualität der Aufnahme im Vorhinein nicht möglich.

Ein weiterer Nachteil solcher Kameras ist, dass diese in der Regel keine fortgeschrittenen und weiterführenden, insbesondere konfigurierbaren oder programmierbaren Bedienfunktionen erlauben, da die verwendete Software meist proprietärer und nicht besonders flexibel ist.

Eine andere beispielhafte bekannte Kategorie von Fotosystemen sind sog. Smartphones oder Tabletcomputer, die häufig sowohl mit einem Kameraelement als auch mit einer Bedienerschnittstelle, einer Anzeige und einem Lichtelement ausgerüstet sind. All diese Komponenten sind in aller Regel feststehend ausgebildet.

Die Lichtelemente von Smartphones oder Tablets sind in Bezug auf Bild- oder Videoaufnahmen in der Regel nicht für Dauerbeleuchtung ausgelegt. Darüber hinaus sind sie meist punktuell und vergleichsweise schwach. Auch diese Kategorie von Fotosystemen hat daher den Nachteil, dass eine Beurteilung der Ausleuchtung vor einer Aufnahme nicht gut möglich ist.

Für einige Anwendungen, beispielsweise zum Erstellen von Passfotos, z.B. in Behörden, oder für Veranstaltungen haben die vorgenannten bekannten Fotosysteme den Nachteil, dass eine Beurteilung der Aufnahme erst nach der Aufnahme erfolgen kann und keine Anpassung an die gegebenen Umstände vor der Aufnahme möglich ist.

Somit stellt sich die Aufgabe, Fotosystem der eingangs genannten Art dahingehend weiterzubilden, ein flexibles und kompaktes Fotosystem bereitzustellen, das einfach bedienbar und flexibel sind, eine gute Ausleuchtung des aufzunehmenden Subjekts oder Objekts und eine Beurteilung der Qualität der Aufnahme vor Durchführen der Aufnahme ermöglichen.

Hauptmerkmale der Erfindung sind im kennzeichnenden Teil von Anspruch 1 angegeben. Ausgestaltungen sind Gegenstand der Ansprüche 2 bis 15.

Beschrieben wird ein Fotosystem mit einem Kameraelement, das wenigstens ein Objektiv und wenigstens einen fotosensitiven Sensor aufweist, einer Bedienerschnittstelle, einer Anzeige und einem Lichtelement, wobei das Kameraelement und die Anzeige in einem Kameragehäuse angeordnet sind, wobei das Kameragehäuse eine Vorderseite, eine Rückseite, einen Gehäuseboden, Seitenteile sowie eine Oberseite aufweist, wobei das Kameraelement an der Vorderseite angeordnet ist, wobei das Lichtelement in einem Lichtelementgehäuse angeordnet ist, wobei das Lichtelementgehäuse an dem Kameragehäuse schwenkbar angeordnet ist, sodass das Lichtelement zwischen einer ersten Stellung, in der das Lichtelementgehäuse an dem Kameragehäuse anliegt, und wenigstens einer zweiten Stellung, in der das Lichtelementgehäuse vom Kameragehäuse absteht, hin- und herschwenkbar ist.

Das Kameraelement kann fest in das Kameragehäuse integriert oder modular austauschbar ausgebildet sein. Das Kameraelement weist mehrere Bestandteile auf, die als vormontierte Baugruppe in das Kameragehäuse eingebaut werden können. Der fotosensitive Sensor des Kameraelements kann unter anderem ein CCD- oder ein CMOS-Sensor sein. Das Objektiv kann ein oder mehrere Linsen und eine feste oder variable Brennweite aufweisen.

Die Anzeige kann insbesondere eine Vollfarbanzeige sein. Mithilfe der Bedienerschnittstelle kann das Fotosystem bedient werden und unter anderem eine Aufnahme ausgelöst werden. Eine entsprechende Aufnahme kann eine Fotographie, eine Serienbildaufnahme oder ein Video sein. In der ersten Stellung liegt eine Seite des Lichtelementgehäuses flächig an einer Seite des Kameragehäuses an.

Dadurch, dass das Lichtelementgehäuse zwischen einer ersten und wenigstens einer zweitem Stellung schwenkbar am Kameragehäuse angeordnet ist, kann das Lichtelement relativ zum Kameragehäuse zwischen verschiedenen Positionen verschwenkt werden. Das Lichtelementgehäuse kann insbesondere stufenlos verschwenkbar an dem Kameragehäuse angeordnet sein. Dies ermöglicht einerseits eine Anpassung der Ausleuchtung sowie gegebenenfalls der Ermöglichung unterschiedlicher Verwendungsmodi, beispielsweise eine Bedienung durch die aufzunehmende Person selbst oder eine Bedienung durch einen Bediener, der das Fotosystem von einer Rückseite, also der dem Kameraelement abgewandten Seite, aus bedient.

Gemäß einer ersten weiterführenden Ausgestaltung kann vorgesehen sein, dass das Lichtelementgehäuse im wesentlichen quaderförmig ausgebildet ist und eine Vorderseite, eine Rückseite, eine Oberseite, einen Gehäuseboden sowie Seitenflächen aufweist.

Dabei können Kanten, also Übergänge von Vorderseite oder Rückseite zu den Seitenteilen abgerundet sein, wodurch etwaige Spannungsspitzen im Material vermieden werden und das Risiko von Verletzungen reduziert werden können.

Ein quaderförmiges Lichtelementgehäuse kann kompakt ausgebildet sein und vielfältig verstellt werden.

Das Lichtelementgehäuse kann im Rahmen dieser Weiterbildung flächig ausgestaltet sein. Die Verwendung eines flächigen Lichtelementgehäuses erlaubt des Weiteren die Verwendung größerer Lichtelemente und somit mehr Flexibilität beim Ausleuchten des aufzunehmenden Objekts oder Subjekts, beispielsweise durch eine flächige oder eine eher punktuelle Beleuchtung. Des Weiteren kann die Dauerlichtstärke gegenüber Blitzen derart ausgestaltet werden, dass eine Beurteilung der Bildqualität bereits vor der Aufnahme möglich ist.

In einer anderen weiterführenden Ausgestaltung kann vorgesehen sein, dass Vorderseite und/oder Rückseite des Lichtelementgehäuses zumindest teilweise transluzent sind, sodass das Lichtelement sowohl in der ersten Stellung als auch in der zweiten Stellung zur Ausleuchtung eines von dem Kameraelement erfassten Aufnahmebereichs verwendbar ist.

Dies ermöglicht eine Verwendung des Lichtelements sowohl auf der Vorderseite als auch auf der Rückseite des Kameragehäuses und eine Verwendung zur direkten und/oder indirekten Ausleuchtung des aufzunehmenden Objekts oder Subjekts. Hierfür können Vorderseite und ggf. Rückseite aus transluzentem Kunststoff bestehen. Das Lichtelementgehäuse kann insbesondere zweiteilig, Vorderseite und daran festgelegte Rückseite, oder dreiteilig, Vorderseite, Rückseite und umlaufender Rahmen, ausgebildet sein.

Gemäß einer anderen weiterführenden Ausgestaltung kann vorgesehen sein, dass das Kameragehäuse im Wesentlichen quaderförmig ist, wobei das Kameragehäuse eine Höhe aufweist, die größer ist als eine Höhe des Lichtelementgehäuses.

Hierdurch kann erreicht werden, dass das Lichtelementgehäuse in der Stellung mit seiner Rückseite vollflächig an der Vorderseite des Kameragehäuses anliegt, wodurch das Fotosystem kompakt und stabil transportiert oder verstaut werden kann.

In einer darüber hinausgehenden weiterführenden Ausgestaltung kann vorgesehen sein, dass das Kameraelement derart im Kameragehäuse angeordnet ist, dass das Objektiv in der ersten Stellung des Lichtelementgehäuses nicht vom Lichtelementgehäuse verdeckt ist.

Somit ist es möglich, das Lichtelementgehäuse komplett am Kameragehäuse anliegen zu lassen und trotzdem Aufnahmen machen zu können, da das Lichtelementgehäuse das Objektiv nicht bedeckt. Das Kameraelement kann in einer Ansicht auf das Kameragehäuse von vorne betrachtet in der Breite mittig oder außermittig, insbesondere einer Gehäuseecke des Kameragehäuses angeordnet sein.

In einer anderen weiterführenden Ausgestaltung kann vorgesehen sein, dass die Anzeige als Bedienerschnittstelle ausgebildet ist, wobei die Anzeige zumindest bereichsweise eine berührungssensitive Oberfläche aufweist.

Die Anzeige kann groß- oder vollflächig berührungssensitiv sein. In dem berührungssensitiven Bereich der Anzeige können ein oder mehrere Bedienbereiche zur Bedienung des Fotosystems darstellbar und durch Druck auf die mit einem den Bedienbereich überlappenden Abschnitt der Oberfläche der Anzeige im dargestellten Bedienbereich betätigbar sein. Entsprechende Bedienbereiche können beispielsweise eine Auslösung einer Aufnahme, eine Anpassung der Aufnahmeparameter oder des Aufnahmemodus bewirken.

Gemäß einer anderen weiterführenden Ausgestaltung kann vorgesehen sein, dass das Lichtelement wenigstens ein Leuchtmittel aufweist, das farb- und/oder leuchtintensitätsveränderlich ist.

Eine Veränderung der Leuchtintensität kann durch dimmbare und/oder eine Mehrzahl einzeln oder gruppenweise an- und abschaltbarer Leuchtmittel erreicht werden. Eine Farbveränderung kann durch die Verwendung mehrerer Leuchtmittel in unterschiedlichen Farben, z.B. Grundfarben erreicht werden, die additiv zusammengemischt werden. Die Leuchtmittel können insbesondere dimmbar sein, um eine Vielzahl von Farben erzeugen zu können.

Hierdurch ist es möglich, unterschiedliche Ausleuchtungen, Lichtstimmungen oder Lichteffekte zu erreichen, wodurch das Fotosystem für unterschiedliche Aufnahmebedingungen geeignet ist, zum Beispiel Tageslicht, Kunstlicht und dergleichen. Durch unterschiedliche Lichtfarben lassen sich auch künstlerische Effekte in den Aufnahmen erzielen. Auch ist es möglich, nicht homogene Helligkeitsverteilungen oder Lichtfarbverteilungen zu ermöglichen.

In einer anderen weiterführenden Ausgestaltung kann vorgesehen sein, dass das Objektiv gegenüber der Vorderseite zurückversetzt ist.

Somit lassen sich Beschädigungen am Kameraelement durch äußere Krafteinwirkungen verhindern. Ein Verkratzen oder Verschmutzen des Objektivs bei einem versenkten Objektiv ist wesentlich unwahrscheinlicher als bei einem von der Vorderseite abstehenden Objektiv. Das Objektiv stellt dann auch keinen Ansatzpunkt zum Einbringen von Scherkräften in das Kameragehäuse dar.

In einer anderen weiterführenden Ausgestaltung kann vorgesehen sein, dass Lichtelementgehäuse und Kameragehäuse mittels wenigstens einer Scharnieranordnung miteinander verbunden sind.

Die Scharnieranordnung kann beispielsweise ein oder mehrere flächenbündige Scharniere mit zwei Drehpunkten aufweisen. In einer anderen Ausgestaltung kann die Scharnieranordnung ein Klavierbandscharnier sein. Auch komplexere Scharniere sind möglich, beispielsweise solche mit mehr als einem Gelenk, wodurch eine vielfältigere Verstellbarkeit des Lichtelementgehäuses relativ zum Kameragehäuse möglich ist, beispielsweise eine Verschwenkbarkeit von der ersten Position, in der die Rückseite des Lichtelementgehäuses an der Vorderseite des Kameragehäuses anliegt in eine zweite Position, in der die Vorderseite des Lichtelementgehäuses an der Rückseite des Kameragehäuses anliegt.

In einer darüber hinausgehenden weiterführenden Ausgestaltung kann vorgesehen sein, dass die wenigstens eine Scharnieranordnung selbsthaltend ist.

Damit wird es möglich, dass Lichtelementgehäuse in beliebige Positionen relativ zum Kameragehäuse zu verschwenken, wobei durch die wenigstens eine selbsthaltende Scharnieranordnung sichergestellt ist, dass das Lichtelementgehäuse sich nicht ohne Einwirkung einer äußeren Kraft verstellt.

In einer alternativen Ausgestaltung kann die Scharnieranordnung arretierbar sein.

Dies kann zum Beispiel durch eine Feststellschraube erreicht werden.

In einer anderen weiterführenden Ausgestaltung kann vorgesehen sein, dass im Kameragehäuse ein Akkumulator zur Energieversorgung des Fotosystems angeordnet ist.

Durch Verwendung eines Akkumulators ist es möglich, das Fotosystem ohne externe Stromversorgung zu betreiben. Dies erleichtert die Aufstellung des Fotosystems insbesondere bei Veranstaltungen, in denen in aller Regel nicht überall ein Zugang zu einer Stromversorgung vorhanden ist.

In einer darüber hinausgehenden weiterführenden Ausgestaltung kann vorgesehen sein, dass im Kameragehäuse ein Ladeanschluss zum Laden des Akkumulators vorgesehen ist.

Der Ladeanschluss kann insbesondere ein magnetischer Ladeanschluss sein, sodass das Ladekabel bei Einwirken einer äußeren Kraft aus verschiedenen Richtungen vom Ladeanschluss getrennt werden kann. Hierdurch kann eine Beschädigung des Ladeanschlusses durch unbeabsichtigtes Einwirkung äußerer Kräfte verhindert werden.

Der Ladeanschluss kann in einer anderen Ausgestaltung ein formschlüssig oder reibschlüssig ausgebildeter Anschluss sein.

In einer darüber hinausgehenden weiterführenden Ausgestaltung kann vorgesehen sein, dass ein Ladeinidkator vorgesehen ist.

Ein solcher Ladeindikator kann insbesondere an dem Ladeanschluss angeordnet sein. Der Ladeindikator kann ein Leuchtmittel, z.B. eine LED, aufweisen.

Mithilfe eines solchen Indikators ist es möglich, den Ladestatus des Geräts anzuzeigen und somit einen korrekten Anschluss eines Ladekabels zu indizieren.

In einer anderen weiterführenden Ausgestaltung kann vorgesehen sein, dass eine Recheneinheit und ein Speicher vorgesehen sind, wobei in dem Speicher von dem Kameraelement gemachte Aufnahmen speicherbar sind.

Hierdurch können die gemachten Aufnahmen bis zur weiteren Verarbeitung im Fotosystem gespeichert werden.

In einer anderen weiterführenden Ausgestaltung kann vorgesehen sein, dass eine Sende- und Empfangseinheit zur Herstellung einer Verbindung mit einem Drucker vorgesehen ist.

Die Sende- und Empfangseinheit kann eine drahtgebundene und/oder eine drahtlose Verbindung zu einem Drucker erlauben, wofür entsprechende Schnittstellen, z.B. USB, und/oder Funkmodule, z.B. Bluetooth und/oder WLAN, vorgesehen sein können. Insbesondere die Verwendung einer drahtlosen Sende- und Empfangseinheit erlaubt eine flexible Nutzung des Fotosystems. Drahtgebundene Systeme können beispielsweise eine USB-Schnittstelle aufweisen. Drahtlose Systeme können verschiedene drahtlose Druckerprotokolle verwenden. Ein bekanntes solches Protokoll ist AirPrint.

In manchen Ausgestaltungen ist es möglich, Ladeanschluss und Sende- und Empfangseinheit miteinander zu kombinieren, beispielsweise durch Verwendung einer USB-Schnittstelle.

In einer anderen weiterführenden Ausgestaltung kann vorgesehen sein, dass an dem Gehäuseboden des Kameragehäuses ein Stativgewinde zur Aufnahme einer Stativgewindeschraube angeordnet ist.

Ein entsprechend ausgerüstetes Fotosystem kann flexibel eingesetzt und positioniert werden, beispielsweise durch Montieren auf einem Gehäusebodenstativ, einem Tischstativ, einem Wandstativ oder dergleichen. Insbesondere ist es möglich, bei wechselnden Einsatzzwecken unterschiedliche Stative zu verwenden.

In einer anderen weiterführenden Ausgestaltung kann vorgesehen sein, dass am Kameragehäuse keine Ausnehmung oder Aussparung zur Aufnahme des Lichtelementgehäuses vorgesehen ist.

Dadurch lassen sich einfachere Gehäusekonturen verwirklichen und die Gestaltungsfreiheit am Kameragehäuse wird erhöht. So kann unter anderem auf der Vorderseite eine weitere Anzeige vorgesehen werden, über den ein zu fotografierendes Subjekt die eigene Aufnahme sehen kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Fotosystem in einer Seitenansicht mit einem Kameragehäuse und einem Lichtelementgehäuse in einer ersten Stellung;
- Fig. 2A: das Fotosystem aus Fig. 1 in einer Ansicht von vorne in der ersten Stellung;
- Fig. 2B: das Fotosystem aus Fig. 1 in einer Ansicht von vorne in einer zweiten Stellung;
- Fig. 3A: das Fotosystem aus Fig. 1 in einer Ansicht von hinten in der ersten Stellung;
- Fig. 3B: das Fotosystem aus Fig. 1 in einer Ansicht von hinten in einer zweiten Stellung;
- Fig. 4: eine schematische Übersicht über Bestandteile des Fotosystems aus Fig. 1;
- Fig. 5A: eine perspektivische Ansicht des Fotosystems aus Fig. 1;
- Fig. 5B: eine perspektivische Ansicht des Fotosystems aus Fig. 1 in aufgeklappter Konfiguration;
- Fig. 5C: eine perspektivische Ansicht einer alternativen Ausführungsform eines Fotosystems;;
- Fig. 6: eine perspektivische Ansicht des Fotosystems aus Fig. 1 von einer Rückseite aus, sowie
- Fig. 7: eine perspektivische Ausschnittsansicht eines Gehäusebodens des Fotosystems aus Fig. 1.

In den nachfolgend dargestellten Ausführungsbeispielen sind gleiche oder gleichwirkende Bauteile zur besseren Lesbarkeit mit gleichen Bezugszeichen versehen.

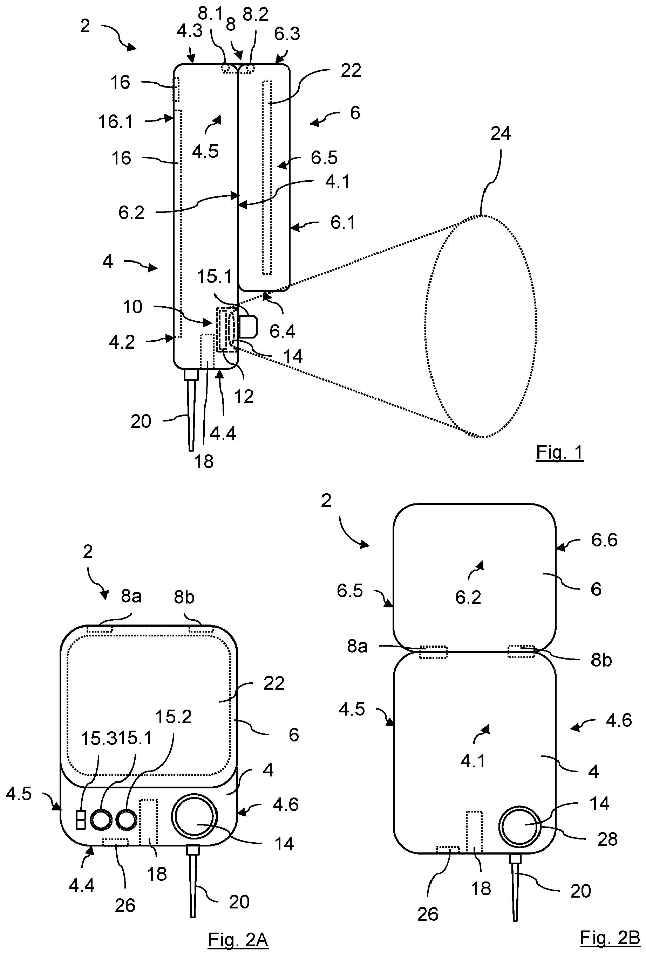

Fig. 1 zeigt ein Fotosystem 2 in einer Seitenansicht mit einem Kameragehäuse 4 und einem Lichtelementgehäuse 6 in einer ersten Stellung.

Das Kameragehäuse 4 weist eine Vorderseite 4.1, eine Rückseite 4.2, eine Oberseite 4.3, einen Gehäuseboden 4.4 sowie eine in Fig. 1 sichtbare Seitenfläche 4.5 auf. Eine der Seitenfläche 4.5 gegenüberliegende Seitenfläche des Kameragehäuses 4 ist in Fig. 1 verdeckt.

Das Lichtelementgehäuse 6 weist eine Vorderseite 6.1, eine Rückseite 6.2, eine Oberseite 6.3, einen Gehäuseboden 6.4 sowie eine in Fig. 1 sichtbare Seitenfläche 6.5 auf. Eine der Seitenfläche 6.5 gegenüberliegende Seitenfläche des Lichtelementgehäuses 6 ist in Fig. 1 verdeckt.

Das Kameragehäuse 4 sowie das Lichtelementgehäuse 6 sind quaderförmig ausgebildet, wobei Gehäusekanten und -ecken abgerundet sind.

Das Kameragehäuse 4 kann aus Metall bestehen oder Metall aufweisen, sodass daran mittels Magneten Sticker oder andere Elemente befestigbar sind.

Kameragehäuse 4 und Lichtelementgehäuse 6 sind mittels einer Scharnieranordnung 8 verschwenkbar miteinander verbunden, sodass das Lichtelementgehäuse 6 relativ zum Kameragehäuse 4 in unterschiedliche Positionen verschwenkt werden kann. In der in Fig. 1 dargestellten Konfiguration liegt die Rückseite 6.2 des Lichtelementgehäuses 6 flächig an der Vorderseite 4.1 des Kameragehäuses 4 an. Eine Höhe des Lichtelementgehäuses 6 ist geringer als eine Höhe des Kameragehäuses 4, sodass das Lichtelementgehäuse 6 die Vorderseite 4.1 des Kameragehäuses 4 nicht vollständig verdeckt.

Die Scharnieranordnung 8 ist flächenbündig ausgebildet und weist zwei Drehachsen 8.1, 8.2 auf, von denen eine mit dem Kameragehäuse 4 überlappt und die andere mit dem Lichtelementgehäuse 6. So ist es möglich, dass das Lichelementgehäuse 6 in wenigstens zwei Stellungen flächig an dem Kameragehäuse 4 anliegt, nämlich in der in Fig. 1 dargestellten Stellung und in einer dazu um 180 Grad verschwenkten Stellung, wie sie in Fig. 2B gezeigt ist.

Die Scharnieranordnung 8 ist selbsthaltend ausgebildet, sodass das Lichtelementgehäuse 6 ohne einwirkende Bedienkräfte in der jeweiligen Position verharrt. Die Scharnieranordnung 8 erlaubt somit eine freie Arretierung des Lichtelementgehäuses 6 in jeder beliebigen Position.

Die Scharnieranordnung 8 kann in alternativen Ausführungsformen eine andere Ausgestaltung haben. Unter anderem ist es möglich, ein Klavierbandscharnier einzusetzen.

In dem Kameragehäuse 4 ist ein Kameraelement 10 angeordnet. Das Kameraelement 10 weist einen fotosensitiven Sensor 12 auf. Der Sensor 12 ist vorliegend ein CCD-Sensor, kann aber in anderen Ausführungsformen auch eine andere Sensortechnologie verwenden, beispielsweise CMOS. Das Kameraelement 10 weist des Weiteren ein Objektiv 14 auf. Das Objektiv 14 ist gegenüber der Vorderseite 4.1 des Kameragehäuses 4 zurückversetzt angeordnet. Das Kameraelement 10 ist unterhalb des Gehäusebodens 6.4 des Lichtelementgehäuses 6 positioniert, sodass auch bei der in Fig. 1 dargestellten ersten Stellung eine Aufnahme möglich ist.

Versetzt zum Kameraelement 10 ist des Weiteren ein Bedienelement 15.1 angeordnet, das vorliegend als Drehknopf ausgestaltet ist. Das Bedienelement 15.1 ist eines von mehreren Bedienelementen 15.1 - 15.3 (siehe Fig. 2A), die zur manuellen Lichtsteuerung dienen.

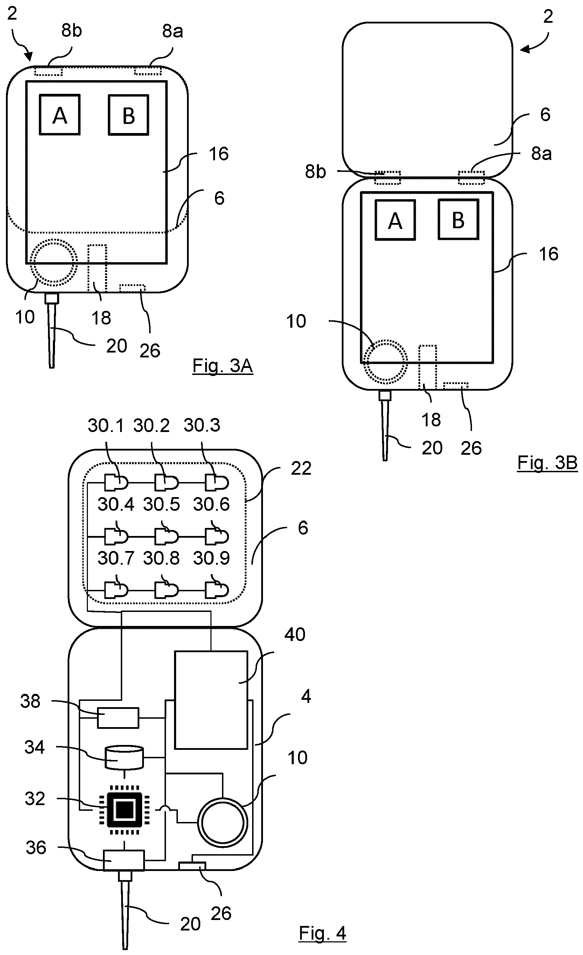

In dem Kameragehäuse 4 ist auf der Rückseite 4.2 des Weiteren eine Anzeige 16 angeordnet. Die Anzeige 16 ist berührungssensitiv und dient gleichzeitig als Bedienerschnittstelle. Dazu weist die Anzeige eine berührungssensitive Oberfläche 16.1 auf. Zur Bedienung werden, wie in Fig. 3A dargestellt, auf der Anzeige 16 Eingabebereiche angezeigt, nach deren Betätigung Funktionen des Fotosystems 2 ausgelöst werden können, beispielsweise die Aufnahme eines Fotos oder eines Videos.

Oberhalb der Anzeige 16 ist eine Taste 17 angeordnet, die die Steuerung des Fotosystems 2 vereinfacht, z.B. dadurch, dass mittels der Taste 17 ein bestimmtes Menü, z.B. das Hauptmenü, oder eine bestimmte Funktion, z.B. ein Auslösen einer Aufnahme ausführbar ist.

Im Gehäuseboden 4.4 des Kameragehäuses 4 ist ein Stativgewinde 18 eingebracht, mithilfe dessen das Fotosystem 2 auf ein Stativ (in Fig. 1 nicht dargestellt) schraubbar ist. Das Stativgewinde 18 kann als Metall- oder Kunststoffhülse ausgeführt sein und ein Standardformat für entsprechende Stativgewinde aufweisen.

Am Gehäuseboden 4.4 des Kameragehäuses 4 ist des Weiteren eine Antenne 20 zur drahtlosen Datenübertragung angeordnet, mithilfe derer eine Funkverbindung zu beispielsweise einem Drucker (nicht dargestellt) herstellbar ist. Hierzu kann ein bekanntes Übertragungsprotokoll verwendet werden, beispielsweise AirPrint.

In den Lichtelementgehäuse 6 ist ein Lichtelement 22 angeordnet. Die Vorderseite 6.1 des Lichtelementgehäuses 6 ist transluzent ausgebildet, sodass von den Lichtelement 22 emittiertes Licht einen vom Kameraelement 12 erfassten Aufnahmebereich 24 ausgeleuchtet. Kameraelement 10, Anzeige 16 und ggf. weitere Elemente wie Speicher und Prozessor können in einem Modul angeordnet sein, das in das Kameragehäuse 4 eingesetzt ist.

Neben der in Fig. 1 dargestellten Kamera kann auf der der Rückseite 4.2 noch eine weitere, in Fig. 1 nicht dargestellte Kamera vorgesehen sein. Diese Kamera kann ebenfalls Bestandteil des Moduls sein.

Fig. 2A zeigt das Fotosystem aus Fig. 1 in einer Ansicht von der Vorderseite in der ersten Stellung des Lichtelementgehäuses 6 relativ zum Kameragehäuse 4.

Die Scharnieranordnung 8 weist zwei Scharniere 8a, 8b auf, die auf einer linken bzw. einer rechten Hälfte der Oberseiten 4.3, 4.4 angeordnet sind.

Das Objektiv 14 des Kameraelements 10 ist seitlich versetzt in der Nähe einer Gehäuseecke angeordnet, die vom Gehäuseboden 4.4 und der Seitenfläche 4.5 gebildet wird. Das seitliche Anordnen des Objektivs 14 reduziert den Platzbedarf und erlaubt unter anderem das Anordnen des Stativgewindes 18 mittig im Gehäuseboden 4.4.

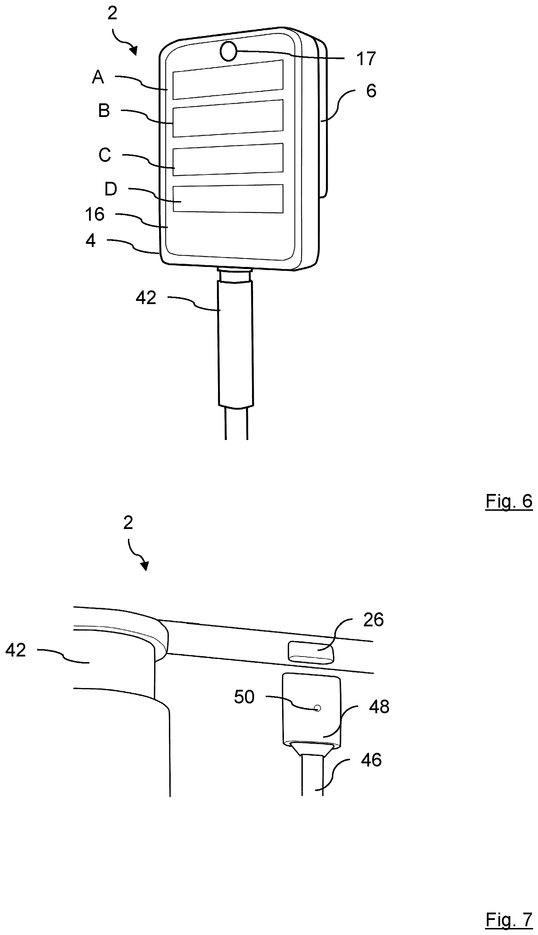

Am Gehäuseboden 4.4. ist des Weiteren ein Ladeanschluss 26 vorgesehen. Der Ladeanschluss 26 ist vorliegend als magnetischer Anschluss ausgeführt, sodass ein entsprechendes Ladekabel mit Stecker ohne Verrastung aufgrund der Magnetkräfte am Ladeanschluss 26 gehalten wird. In verschiedenen Ausführungsformen kann der Ladeanschluss 26 auch zur Datenübertragung dienen. Weitere Details zum Ladeanschluss werden in Zusammenhang mit Fig. 7 erläutert.

In alternativen Ausgestaltungen kann der Ladeanschluss als Steckeranschluss ausgeführt sein, der zur reib- oder formschlüssigen Halterung eines Ladekabels ausgestaltet ist, z.B. ein Rundstecker, ein USB-Stecker oder dergleichen.

Neben dem Bedienelement 15.1 sind weitere Bedienelemente 15.2 und 15.3 vorgesehen. Das Bedienelement 15.2 ist ein Drehknopf, das Bedienelement 15.3 ein Schalter. Das Bedienelement 15.3 dient zum An- und Ausschalten der Leuchtmittel im Lichtelementgehäuse 6. Bedienelemente 15.1 und 15.2 dienen zur Regelung von Helligkeit bzw. Lichtintensität und/oder Lichtfarbe der Leuchtmittel.

Die Bedienelemente 15.1 und 15.2 ist abnehmbar ausgestaltet, sodass ein versehentliches Verstellen nach Einstellen der gewünschten Helligkeit und Lichtfarbe im Betrieb vermieden werden kann. Die durch das Abnehmen der Bedienelemente 15.1, 15.2 im Kameragehäuse 4 verbleibenden Öffnungen können mittels einer Blende, z.B. bei metallischem Gehäuse einem magnetischen Sticker, verschlossen werden.

Fig. 2B zeigt das Fotosystem 2 aus Fig. 1 in einer Ansicht von vorne in einer zweiten Stellung.

In der zweiten Stellung ist das Lichtelementgehäuse 6 relativ zum Kameragehäuse 4 verschwenkt. Die Verschwenkung kann mithilfe der Scharnieranordnung 8 stufenlos erfolgen. Dadurch, dass die Scharnieranordnung 8 selbsthaltend ausgeführt ist, verändert sich die relative Position des Lichtelementgehäuses 6 nicht relativ zum Kameragehäuse 4.

Durch das Aufklappen des Lichtelementgehäuses 6 ist die Rückseite 6.2 dem Aufnahmebereich (in Fig. 2B nicht dargestellt) zugewandt.

Die Linse 14 ist in einer konischen Vertiefung 28 angeordnet, sodass die Linse 14 vor mechanischen Einflüssen geschützt ist.

Fig. 3A zeigt das Fotosystem 2 aus Fig. 1 in einer Ansicht von der Rückseite in der ersten Stellung.

Auf der Rückseite 4.2 ist die Anzeige 16 angeordnet, die berührungssensitiv ausgebildet ist. Die Anzeige 16 kann dazu zum Beispiel kapazitative Sensoren aufweisen, die die Position einer Berührung der Anzeige 16 erfassen. Die Anzeige 16 kann beispielsweise ein LED- oder ein OLED-Display aufweisen.

Auf der Anzeige 16 werden Bedienbereiche A, B angezeigt. Wird eine Oberfläche der Anzeige 16 in wenigstens einem der Bedienbereiche A, B berührt, werden unterschiedliche Bedienfunktionen ausgelöst, zum Beispiel eine Aufnahme, eine Veränderung der Lichtfarbe, der Lichthelligkeit, des Aufnahmemodus oder Ähnliches.

Fig. 3B zeigt das Fotosystem 2 aus Fig. 1 in einer Ansicht von vorne in einer zweiten Stellung.

Wie im Zusammenhang mit Fig. 2B beschrieben ist in der zweiten Stellung ist das Lichtelementgehäuse 6 relativ zum Kameragehäuse 4 verschwenkt.

Fig. 4 zeigt eine schematische Übersicht über Bestandteile des Fotosystems 2 aus Fig. 1.

Das Lichtelement 22 (gestrichelt umrahmt) im Lichtelementgehäuse 6 weist eine Matrix von LEDs 30.1 bis 30.9 auf, die dimmbar und einzeln ansteuerbar sind. Die LEDs 30.1 bis 30.9 emittieren unterschiedliche Farbspektren, sodass durch additive Farbmischung eine Vielzahl unterschiedlicher Farben einschließlich Weiß abgebbar ist.

Das Lichtelement 22 ist mit einer Recheneinheit 32 verbunden, die die Steuerung des Fotosystems 2 übernimmt. Die Recheneinheit 32 ist des Weiteren mit einem Speicher 34 verbunden, in dem einerseits ein Computerprogramm gespeichert ist, das, wenn es von der Recheneinheit 32 geladen und ausgeführt wird, zur Steuerung des Fotosystems dient, einschließlich der Steuerung von Aufnahmeparametern und dergleichen. Der Speicher 34 dient außerdem dazu, von der Kameraeinheit 10 gemachte Aufnahmen zu speichern.

In manchen Ausführungsformen kann der Speicher 34 aus einer Mehrzahl von Einzelspeichern zusammengesetzt sein, von denen einige als Wechselspeicher, z.B. SD-Karte ausgebildet sind.

Die Recheneinheit 34 ist des Weiteren mit einer Sende- und Empfangseinheit 36 verbunden, die ihrerseits wiederum mit der Antenne 20 verbunden ist. Die Sende- und Empfangseinheit 36 kann konform mit einem oder mehreren Protokollen arbeiten, beispielsweise mit Bluetooth oder WLAN.

Darüber hinaus ist die Recheneinheit 34 mit einer Anzeigesteuerung 38 verbunden. Über die Anzeigesteuerung 38 kann die Recheneinheit 34 sowohl den von der Anzeige 16 anzuzeigenden Inhalt bestimmen als auch Bedieneingaben von einem Benutzer des Fotosystems 2 empfangen und umsetzen.

Die Recheneinheit 34 ist außerdem mit dem Kameramodul 10 verbunden und kann das Kameramodul 10 entsprechend steuern, z.B. eine Blende sowie eine Belichtungszeit einstellen, das Objektiv 14 fokussieren, eine Belichtungsmessung durchführen und dergleichen. In manchen Ausgestaltungen ist es des Weiteren möglich, dass die Recheneinheit 34 weiterführende Analysen und Berechnungen durchführt, z.B. eine Objekt- bzw. Personenerkennung anhand der Daten des Sensors 12, einen Weißabgleich und dergleichen mehr.

Die Energieversorgung des Fotosystems 12 erfolgt mithilfe eines im Kameragehäuse 4 angeordneten Akkumulators 40, der mit dem Ladeanschluss 26 und allen Energieverbrauchern des Systems verbunden ist, einschließlich der nicht dargestellten Komponenten wie der Anzeige 16. Der Akkumulator 40 ist mit dem Ladeanschluss 26 verbunden und kann mittels des Ladeanschlusses 26 geladen werden.

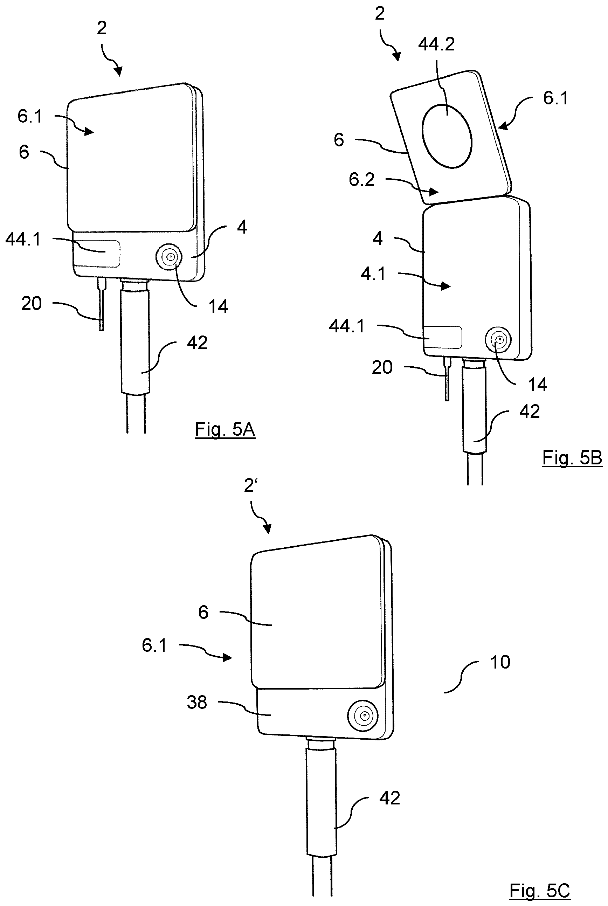

Fig. 5A zeigt eine perspektivische Ansicht des Fotosystems 2.

Das Fotosystem 2 ist mittels des Stativgewindes 18 auf einem Stativ 42 montiert. Das Stativ 42 ist vorliegend ein Einbeinstativ.

An dem Gehäuse 4 ist ein magnetischer Sticker 44.1 angebracht. Der Sticker 44.1 überdeckt nicht das Objektiv 14.

Fig. 5B zeigt eine perspektivische Ansicht des Fotosystems 2 aus Fig. 1 in aufgeklappter Konfiguration.

Auf der Rückseite 6.2 ist ein weiterer magnetischer Sticker 44.2 angebracht. Die magnetischen Sticker 44.1, 44.2 können für die jeweilige Verwendung individualisiert sein, z.B. für ein bestimmtes Event. Wird das Fotosystem 2 beispielsweise für eine Hochzeit gebucht, kann ein individueller Magnetsticker mit dem Namen des Brautpaars aufgebracht werden.

Die magnetischen Sticker 44.1, 44.2 sind so gestaltet, dass sie funktionswesentliche Elemente des Fotosystems 2 wie das Objektiv 14 und/oder bestimmte der Bedienelemente 15.1 bis 15.3 frei halten, entweder durch ihre Kontur oder durch entsprechende Aussparungen.

Fig. 5C zeigt eine perspektivische Ansicht einer alternativen Ausführungsform eines Fotosystems 2'.

Fig. 6 zeigt eine perspektivische Ansicht des Fotosystems 2 aus Fig. 1 von einer Rückseite aus.

Auf der Anzeige 16 sind verschiedene Bedienbereiche A - D abgebildet, mittels derer das Fotosystem 2 bedienbar ist. Einer der Bedienbereiche A - D kann beispielsweise zur Auslösung einer Aufnahme vorgesehen sein, ein anderer zur Auswahl von bestimmten Effekten.

Fig. 7 zeigt eine perspektivische Ausschnittsansicht eines Gehäusebodens des Fotosystems 2 aus Fig. 1.

Neben dem Stativ 42 ist der Ladeanschluss 26 angeordnet. Ein passendes Ladekabel 40 mit Ladestecker 48 ist benachbart zum Ladeanschluss 26 angeordnet. Der Ladestecker 48 kann eine formschlüssige und/oder kraftschlüssige, z.B. mittels Magneten, Verbindung mit dem Ladeanschluss 26 herstellen.

An dem Ladestecker 48 ist eine Ladeanzeigediode 50 vorgesehen, die einen korrekten Anschluss des Ladekabels 40 sowie den Ladezustand signalisiert.

In einer nicht dargestellten alternativen Ausführungsform kann eine Ladeanzeigediode alternativ oder zusätzlich im Gehäuse 4 des Fotosystems 2 vorgesehen sein.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 2, 2': Fotosystem
- 4: Kameragehäuse
- 4.1: Vorderseite
- 4.2: Rückseite
- 4.3: Oberseite
- 4.4: Gehäuseboden
- 4.5: Seitenfläche
- 4.6: Seitenfläche
- 6: Lichtelementgehäuse
- 6.1: Vorderseite
- 6.2: Rückseite
- 6.3: Oberseite
- 6.4: Gehäuseboden
- 6.5: Seitenfläche
- 6.6: Seitenfläche
- 8: Scharnieranordnung
- 8.1, 8.2: Drehachse
- 8a, 8b: Scharnier
- 10: Kameraelement
- 12: Sensor
- 14: Objektiv
- 15.1 - 15.3: Bedienelement
- 16: Anzeige
- 16.1: berührungssensitive Oberfläche
- 17: Taste
- 18: Stativgewinde
- 20: Antenne
- 22: Lichtelement
- 24: Aufnahmebereich
- 26: Ladeanschluss
- 28: konische Vertiefung
- 30.1 - 30.9: LED
- 32: Recheneinheit
- 34: Speicher
- 36: Sende- und Empfangseinheit
- 38: Anzeigesteuerung
- 40: Akkumulator
- 42: Stativ
- 44.1, 44.2: magnetischer Sticker
- 46: Ladekabel
- 48: Ladestecker
- 5: Ladeanzeigediode
- A - D: Bedienbereich

## Patentansprüche

1. Fotosystem (2, 2') mit einem Kameraelement (10), das wenigstens ein Objektiv (14) und wenigstens einen fotosensitiven Sensor (12) aufweist, einer Bedienerschnittstelle (16), einer Anzeige (16) und einem Lichtelement (22), **dadurch gekennzeichnet, dass** das Kameraelement (10) und die Anzeige (16) in einem Kameragehäuse (4) angeordnet sind, wobei das Kameragehäuse (4) eine Vorderseite (4.1), eine Rückseite (4.2), einen Gehäuseboden (4.4), Seitenteile (4.5, 4.6) sowie eine Oberseite (4.3) aufweist, wobei das Kameraelement (10) an der Vorderseite (4.1) angeordnet ist, wobei das Lichtelement (22) in einem Lichtelementgehäuse (6) angeordnet ist, wobei das Lichtelementgehäuse (6) an dem Kameragehäuse (4) schwenkbar angeordnet ist, sodass das Lichtelement (22) zwischen einer ersten Stellung, in der das Lichtelementgehäuse (6) an dem Kameragehäuse (4) anliegt, und wenigstens einer zweiten Stellung, in der das Lichtelementgehäuse (6) vom Kameragehäuse (4) absteht, hin- und herschwenkbar ist.

2. Fotosystem (2, 2') nach Anspruch 1, **dadurch gekennzeichnet, dass** das Lichtelementgehäuse (6) im wesentlichen quaderförmig ausgebildet ist und eine Vorderseite (6.1), eine Rückseite (6.2), eine Oberseite (6.3), einen Gehäuseboden (6.4) sowie Seitenflächen (6.5, 6.6) aufweist.

3. Fotosystem (2, 2') nach Anspruch 2, wobei Vorderseite (6.1) und/oder Rückseite (6.2) des Lichtelementgehäuses (6) zumindest teilweise transluzent sind, sodass das Lichtelement (22) sowohl in der ersten Stellung als auch in der zweiten Stellung zur Ausleuchtung eines von dem Kameraelement (10) erfassten Aufnahmebereichs (24) verwendbar ist.

4. Fotosystem (2, 2') nach einem der vorangegangenen Ansprüche, **dadurch gekennzeichnet, dass** das Kameragehäuse (4) im Wesentlichen quaderförmig ist, wobei das Kameragehäuse (4) eine Höhe aufweist, die größer ist als eine Höhe des Lichtelementgehäuses (6).

5. Fotosystem (2, 2') nach Anspruch 4, **dadurch gekennzeichnet, dass** das Kameraelement (10) derart im Kameragehäuse (4) angeordnet ist, dass das Objektiv (14) in der ersten Stellung des Lichtelementgehäuses (6) nicht vom Lichtelementgehäuse (6) verdeckt ist.

6. Fotosystem (2, 2') nach einem der vorangegangenen Ansprüche, **dadurch gekennzeichnet, dass** die Anzeige (16) als Bedienerschnittstelle (16) ausgebildet ist, wobei die Anzeige (16) zumindest bereichsweise eine berührungssensitive Oberfläche (16.1) aufweist.

7. Fotosystem (2, 2') nach einem der vorangegangenen Ansprüche, **dadurch gekennzeichnet, dass** das Lichtelement (22) wenigstens ein Leuchtmittel (30.1 - 30.9) aufweist, das farb- und/oder leuchtintensitätsveränderlich ist.

8. Fotosystem (2, 2') nach einem der vorangegangenen Ansprüche, **dadurch gekennzeichnet, dass** das Objektiv (14) gegenüber der Vorderseite (4.1) zurückversetzt ist.

9. Fotosystem (2, 2') nach einem der vorangegangenen Ansprüche, **dadurch gekennzeichnet, dass** Lichtelementgehäuse (6) und Kameragehäuse (4) mittels wenigstens einer Scharnieranordnung (8) miteinander verbunden sind.

10. Fotosystem (2, 2') nach Anspruch 9, wobei das wenigstens eine Scharnieranordnung (8) selbsthaltend ist.

11. Fotosystem (2, 2') nach einem der vorangegangenen Ansprüche, **dadurch gekennzeichnet, dass** im Kameragehäuse (4) ein Akkumulator (40) zur Energieversorgung des Fotosystems (2, 2') angeordnet ist.

12. Fotosystem (2, 2') nach Anspruch 11, **dadurch gekennzeichnet, dass** im Kameragehäuse (4) ein Ladeanschluss (26) zum Laden des Akkumulators (40) vorgesehen ist.

13. Fotosystem (2, 2') nach einem der vorangegangenen Ansprüche, **dadurch gekennzeichnet, dass** eine Recheneinheit (32) und ein Speicher (34) vorgesehen sind, wobei in dem Speicher (34) von dem Kameraelement (10) gemachte Aufnahmen speicherbar sind.

14. Fotosystem (2, 2') nach einem der vorangegangenen Ansprüche, **dadurch gekennzeichnet, dass** eine Sende- und Empfangseinheit (36) zur Herstellung einer Verbindung mit einem Drucker vorgesehen ist.

15. Fotosystem (2, 2') nach einem der vorangegangenen Ansprüche, **dadurch gekennzeichnet, dass** an dem Gehäuseboden (4.4) des Kameragehäuses (4) ein Stativgewinde (10) zur Aufnahme einer Stativgewindeschraube angeordnet ist.

16. Fotosystem (2, 2') nach einem der vorangegangenen Ansprüche, **dadurch gekennzeichnet, dass** am Kameragehäuse (4) keine Ausnehmung oder Aussparung zur Aufnahme des Lichtelementgehäuses (6) vorgesehen ist.
